Europäisches Patentamt

(19) European Patent Office

Office européen des brevets

(11) Numéro de publication: **0 186 530**
**A1**

(12) # DEMANDE DE BREVET EUROPEEN

(21) Numéro de dépôt: **85402089.8**

(22) Date de dépôt: **30.10.85**

(51) Int. Cl.⁴: **H 02 K 1/14**
**H 02 K 5/04**

(30) Priorité: **28.11.84 FR 8418104**

(43) Date de publication de la demande:
**02.07.86 Bulletin 86/27**

(84) Etats contractants désignés:
**DE GB IT SE**

(71) Demandeur: **EQUIPEMENTS AUTOMOBILES MARCHAL**
**26, rue Guynemer**
**F-92132 Issy-les-Moulineaux(FR)**

(72) Inventeur: **Ragot, Roger**
**52, Allée de Bellevue**
**F-94310 Orly(FR)**

(74) Mandataire: **Peuscet, Jacques et al,**
**3, Square de Maubeuge**
**F-75009 Paris(FR)**

(54) Perfectionnements aux procédés pour fabriquer une culasse de machine électrique, et culasse de machine électrique.

(57) Procédé pour fabriquer une culasse de machine électrique selon lequel on découpe un flan de tôle (C) et on enroule
ce flan de manière à amener l'un contre l'autre les bords
transversaux extrêmes (A, B), la longueur du flan correspondant à celle du périmètre d'une section transversale de la
culasse. Les bords transversaux (A, B) du flan sont découpés
en gradins (a1, a2; b1, b2) délimitant, entre eux, des bandes
successives (5, 6) ayant une longueur totale (L) égale au
périmètre souhaité pour la culasse et l'on enroule le flan
ainsi formé de manière que les bords transversaux opposés
(a1, b1; a2, b2) des bandes successives viennent l'un contre
l'autre.

FIG. 2

0186530

PERFECTIONNEMENTS AUX PROCEDES POUR FABRIQUER UNE CULASSE DE
MACHINE ELECTRIQUE, ET CULASSE DE MACHINE ELECTRIQUE.

L'invention est relative à un procédé pour fabriquer une culasse de machine électrique selon lequel on découpe un flan de tôle et on enroule ce flan de manière à amener l'un contre l'autre les bords transversaux extrêmes, la longueur du flan correspondant à celle du périmètre d'une section transversale de la culasse.

On connaît un procédé selon lequel un flan de tôle ayant une épaisseur relativement importante, de manière à pouvoir servir de culasse en fer à retour de flux, est cintrée en forme de tube par laminage. Le joint de raccordement demeuré ouvert entre les bords transversaux amenés l'un contre l'autre, est ensuite soudé électriquement avec électrode et apport de métal.

Un autre procédé consiste à réaliser, au moment de la découpe du flan, des pattes mâles sur tout un bord rectiligne du flan et des embrèvements femelles conjuguées des pattes sur l'autre bord rectiligne transversal du flan, les pattes étant destinées à rentrer dans les embrèvements après cintrage du flan. On obtient ainsi un maintien sans soudure du tube laminé.

Bien que ces procédés donnent relativement satisfaction, l'expérience a montré qu'il subsiste, au niveau de la zone de raccordement des bords transversaux, une partie du tube qui n'est pas parfaitement cylindrique.

Comme la culasse est destinée à servir de retour de flux, lorsqu'on a introduit à l'intérieur de cette culasse des éléments magnétiques, telles que des ferrites pour constituer des pôles de la machine électrique, le défaut de cylindricité au niveau des bords transversaux crée généralement un entrefer parasite et des pertes magnétiques entre la culasse et l'élément magnétique situé à l'intérieur de la culasse et s'étendant, généralement, de part et d'autre de la zone de raccordement.

L'invention a pour but, surtout, de fournir un procédé pour fabriquer une culasse de machine électrique, du genre défini précédemment, qui réponde mieux que jusqu'à ce jour aux diverses exigences de la pratique et qui permette, notamment, d'obtenir par cintrage ou enroulement ou pliage d'un flan de tôle, une culasse dont la zone de raccordement s'écarte le moins possible de la courbe fermée souhaitée pour la section transversale fermée.

Selon l'invention, un procédé pour fabriquer une culasse de machine électrique, du genre défini précédemment, est caractérisé par le fait que les bords transversaux du flan sont découpés en gradins délimitant, entre eux, des bandes successives ayant une longueur totale égale au périmètre souhaité pour la culasse, et que l'on enroule le flan ainsi formé de manière que les bords transversaux opposés des bandes successives viennent l'un contre l'autre.

De cette manière, on évite d'avoir à cinter une bande dont la largeur (dimension suivant une direction orthogonale au cintrage) serait trop importante par rapport au diamètre d'enroulement, ce qui conduirait à un défaut de cylindricité de la zone de raccordement des bords rectilignes s'étendant suivant toute la largeur (devenue longueur de cylindre enroulé).

Le découpage suivant plusieurs segments qui se trouvent décalés angulairement lorsque la culasse est enroulée permet d'améliorer la cylindricité de la culasse dans les diverses zones de raccordement correspondant aux gradins.

De préférence, le décalage transversal entre les bords de deux gradins successifs est égal au quotient du périmètre de la section transversale de la culasse par un nombre pair $n$, et le nombre de bandes délimitées par les gradins est au moins égal à $n$.

Le nombre pair $n$ est généralement égal au nombre d'éléments magnétiques, notamment de ferrites, disposés à l'intérieur de la culasse.

Avantageusement, le nombre $n$ est égal à 2, de telle sorte que les zones de raccordement des gradins successifs sont décalées angulairement de 180°, lorsque la culasse est formée.

Le flan peut présenter des gradins décalés transversalement, les uns par rapport aux autres, alternativement dans un sens, puis dans l'autre.

Selon une autre possibilité, les gradins successifs peuvent être décalés transversalement dans le même sens.

Les éléments magnétiques, notamment les ferrites, sont placés à l'intérieur de la culasse de manière à s'étendre angulairement d'une même distance de part et d'autre d'une zone de raccordement de gradins.

Les largeurs des bandes délimitées par les gradins successifs sont de préférence égales.

Au moins une patte d'accrochage peut être prévue sur le bord d'au moins une bande, tandis qu'un embrèvement conjugué est prévu sur l'autre bord de la bande pour recevoir la patte et assurer l'accrochage des deux bords. ---------------
------------------------------------------------------------------
-------------------------------------------------------------------.

Les bords transversaux des bandes, délimitées par les gradins, sont généralement parallèles à la direction de l'axe de la culasse formée.

Il est clair que les termes cintré ou enroulé doivent être compris dans un sens large englobant le pliage ; en effet, l'invention s'applique à toute forme de culasse à section fermée pouvant être obtenue à partir d'un flan de métal, par exemple des culasses à section transversale carrée, rectangulaire, ou rectangulaire à méplats, polygonale, etc...

L'invention concerne également une culasse de machine électrique, notamment obtenue par un procédé tel que défini précédemment, cette culasse étant caractérisée par le fait qu'elle présente, sur sa paroi, une zone de raccordement en gradins.

De préférence, la distance angulaire entre les zones de raccordement successives de deux gradins adjacents est de 180° environ.

L'invention consiste, mises à part les dispositions exposées ci-dessus, en certaines autres dispositions dont il sera plus explicitement question ci-après à propos de modes de réalisation particuliers décrits avec référence aux dessins ci-annexés, mais qui ne sont nullement limitatifs.

La figure 1, de ces dessins, est une vue schématique en élévation d'une culasse de machine électrique.

La figure 2 est une vue, en plan, d'un flan de tôle permettant de réaliser une culasse selon le procédé de l'invention.

Les figures 3 et 4 sont des coupes schématiques du détail des bords de la zone de raccordement de la culasse.

Les figures 5 à 7 montrent, en plan, d'autres configurations possibles pour un flan selon le procédé de l'invention.

La figure 8 est un schéma d'une autre forme possible de culasse.

La figure 9 est une vue en perspective d'une culasse selon l'invention.

La figure 10 enfin, est une vue de détail en plan d'une variante de réalisation.

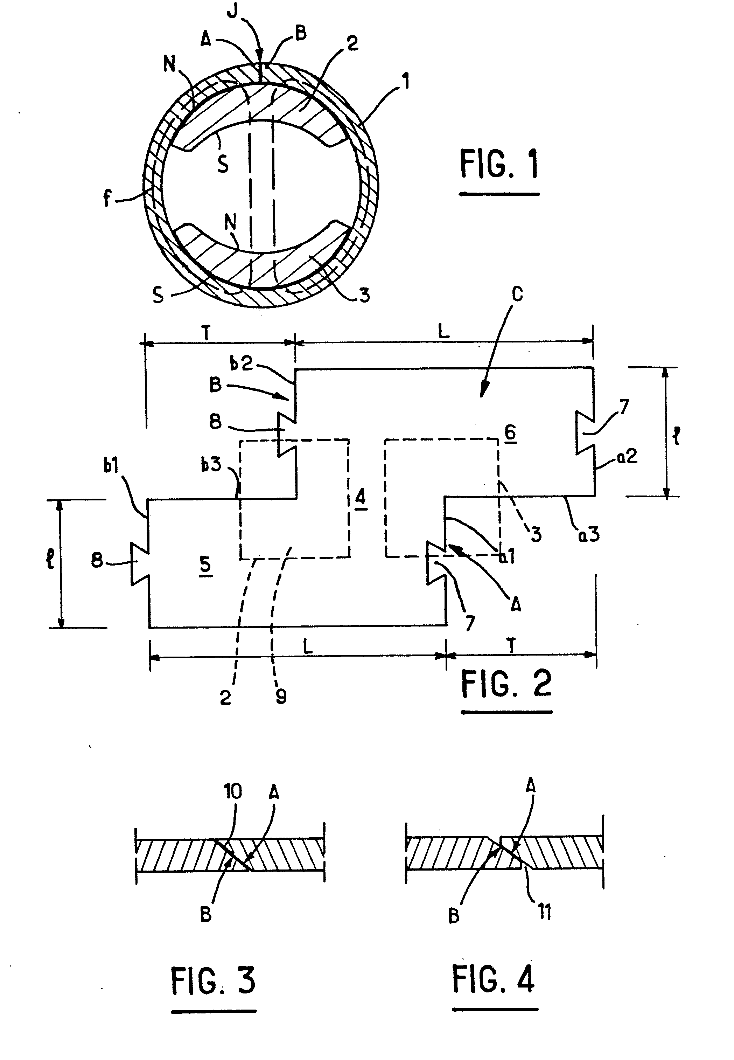

En se reportant aux dessins, notamment à la figure 1, on peut voir un stator d'une ----- machine électrique; dans le cas présent, il s'agit d'un moteur électrique, comprenant une culasse 1 à l'intérieur de laquelle sont montés deux éléments magnétiques constitués par des ferrites 2, 3, diamétralement opposés, et s'étendant suivant un arc. La culasse 1 a été représentée sur la figure 1 avec une section circulaire. Cette culasse 1 peut avoir une section différente, notamment carrée, rectangulaire, ou autre. La culasse 1 est réalisée en un matériau conducteur du flux magnétique, notamment en fer. Les ferrites 2 et 3 comportent -------- des pôles magnétiques N et S --------------------------------------- et établissent un champ magnétique dont les lignes de flux f sont schématiquement représentées sur la figure 1. On voit que ces lignes de flux retournent d'une ferrite à l'autre ------------------------------ -- en cheminant dans la culasse 1.

Cette culasse 1 est obtenue par enroulement, cintrage ou pliage d'un flan de tôle de manière à amener l'un contre l'autre les bords transversaux extrêmes A, B de ce flan. La longueur du flan correspond à celle du périmètre de la section transversale souhaitée pour la culasse 1.

On voit que la zone de raccordement J des bords A, B amenés l'un contre l'autre en juxtaposition, mais non superposés, introduit une coupure dans le cheminement de retour du flux dans la culasse 1. Pour réduire les effets de cette coupure, on dispose, généralement, les ferrites de telle sorte que la ferrite 2, par exemple, s'étende de part et d'autre de la zone J de la même valeur angulaire. Ainsi, la zone neutre de la ferrite 2 se trouve sensiblement au droit de la zone de raccordement J de telle sorte que l'effet négatif, de cette zone J est réduit.

Pour réduire plus encore cet effet négatif de la zone de raccordement J, il est souhaitable, qu'à ce niveau, la culasse 1 épouse le mieux possible la courbure théorique souhaitée, courbure à laquelle correspond généralement la surface extérieure de la ferrite 2. Or, comme expliqué précédemment, au niveau des bords A et B, le cintrage du flan de tôle ne s'effectue pas dans d'aussi bonnes conditions que sur le reste du flan, de telle sorte qu'un entrefer parasite apparaît entre ces bords A et B et la surface externe, dans le sens radial, de la ferrite 2.

Le procédé de l'invention expliqué ci-après, vise notamment à réduire cet entrefer en permettant d'obtenir une culasse dont la section transversale soit plus proche de la forme théorique souhaitée.

Pour fabriquer une telle culasse, selon l'invention, on part d'un flan C (figure 2) dont les bords transversaux A, B sont découpés en gradins. Selon la variante de la figure 2, le bord A se compose de deux segments a1, a2, rectilignes, parallèles à la direction de l'axe de la culasse formée, ces deux segments étant reliés par un segment longitudinal a3. Le côté B est constitué de segments b1, b2 et b3 semblables à ceux qui viennent d'être décrits.

Les segments a3, b3 situés dans le prolongement l'un de l'autre, sont séparés par une zone 4 du flan de tôle.

Selon la représentation de la figure 2, les segments a3, b3 sont à angle droit par rapport aux segments a1, a2, b1, b2 ; toutefois, l'angle entre ces divers segments pourrait être différent d'un angle droit.

Le flan C est donc constitué, selon la représentation de la figure 2, par deux éléments rectangulaires décalés l'un par rapport à l'autre suivant la direction de la longueur, reliés l'un à l'autre par une partie commune. Les gradins conjugués a1, b1, respectivement a2, b2 délimitent entre eux des bandes successives désignées par 5 et 6 sur la figure 2 qui ont une longueur L égale au périmètre souhaité pour la culasse.

Des moyens d'accrochage, formés par exemple par des embrèvements 7 en forme de "queue d'aronde" prévus sur les segments a1, a2 et par des pattes de forme conjuguée 8 prévues sur les segments b1, b2, peuvent être prévus de telle sorte que lorsque l'on enroule le flan C de la figure 2 pour former la culasse 1, les pattes 8 viennent dans les embrèvements 7 tandis que les bords opposés a1, b1, respectivement a2, b2 des bandes successives, viennent l'un contre l'autre.

On comprend, ainsi, que la zone de raccordement J des bords A, B ne s'étend pas suivant toute une génératrice de la culasse 1, mais est découpée suivant plusieurs segments, correspondant à a1, a2 qui se trouvent décalés angulairement lorsque la culasse est réalisée. Cette répartition permet d'améliorer la réalisation de la culasse et d'obtenir des formes plus proches de la forme théorique souhaitée.

De préférence, les bandes 5, 6 ont la même largeur $l$.

Le décalage transversal T entre les bords a1, a2 de deux gradins successifs est égal au quotient du périmètre de la section transversale de la culasse par un nombre pair $n$. Comme ce périmètre est égal à la longueur L, il apparaît que le décalage T est égal au quotient de la longueur L des bandes 5 6, par un nombre pair n.

Le nombre des bandes 5, 6 est au moins égal à n.

Dans le cas de la figure 2, le nombre pair n est égal à 2 et le nombre des bandes 5, 6 est aussi égal à 2. Il en résulte que le décalage T est égal à L/2. La zone 4 de liaison entre les deux bandes 5 et 6 a une dimension, suivant la direction longitudinale (direction des bords a3, b3) égale au décalage T et égale à L/2.

On comprend que lorsque l'on cintre le flan C de manière à former la culasse 1 de la figure 1, les bords a1, b1 et respectivement a2, b2 déterminent deux parties, décalées à 180° l'une par rapport à l'autre, de la zone de raccordement J, chaque partie s'étendant sur une distance l correspondant à la moitié de la dimension de la culasse 1 suivant la direction de son axe. On a représenté schématiquement par un contour en tirets, sur la figure 2, les positions des ferrites 2 et 3, dans la culasse terminée, par rapport aux gradins. On voit que chaque ferrite présente une moitié s'étendant suivant une partie de la zone de raccordement J entre deux bords opposés d'un gradin, tandis que l'autre moitié de la ferrite se trouve appliquée contre une zone telle que 9 du flan de tôle qui ne comporte aucune interruption transversale.

Comme visible sur la figure 3, les bords A et B destinés à venir l'un contre l'autre après formage de la culasse peuvent être chanfreinés suivant toute leur épaisseur de manière à venir s'appliquer l'un contre l'autre suivant un plan oblique 10.

En variante, comme représenté sur la figure 4, l'angle vif du chanfrein de chaque bord A, B est abattu de telle sorte qu'un espace de dimension réduite 11, à contour sensiblement triangulaire existe à chacune des extrémités du plan de joint des bords A et B.

Le flan C peut avoir des configurations différentes de celle représentée sur la figure 2.

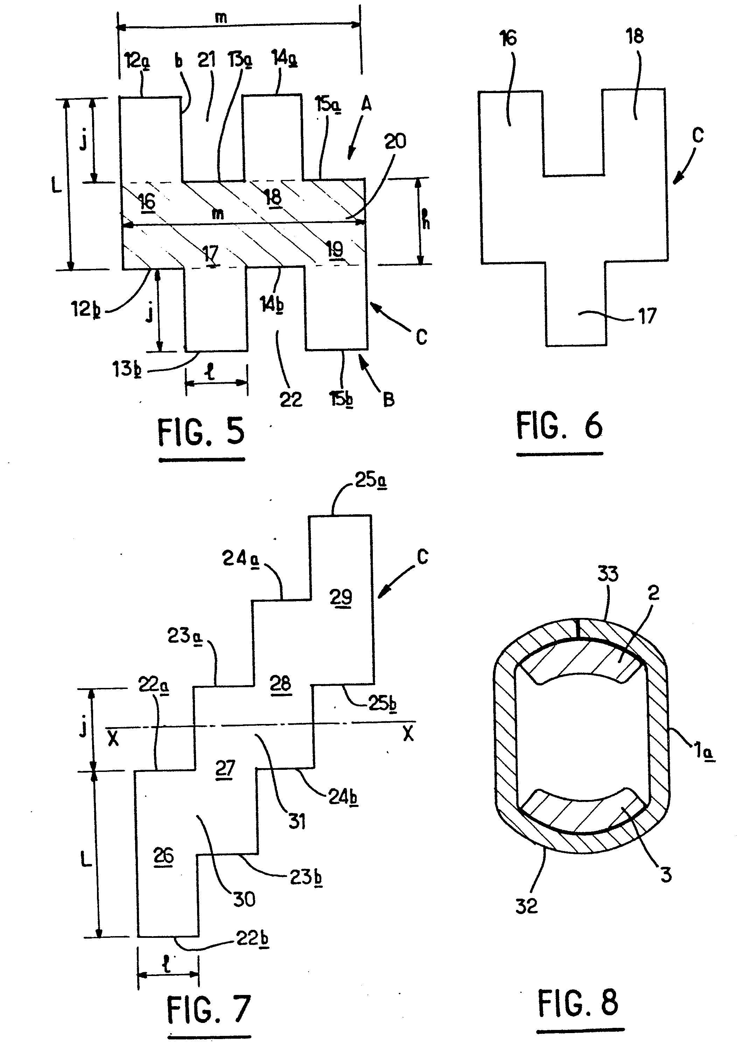

Comme visible sur la figure 5, le flan C présente plusieurs gradins 12a, 13a, 14a, 15a d'une part et, 12b, 13b, 14b,15b d'autre part, sur chacun des bords transversaux A, B. Les gradins successifs sont décalés transversalement, les uns par rapport aux autres, alternativement dans un sens, puis dans l'autre. Les bords transversaux des gradins sont parallèles à la direction de l'axe de la culasse qui sera formée à partir du flan ; les bords tels que b reliant les gradins successifs sont orthogonaux à ces gradins.

Des bandes 16, 17, 18, 19 sont déterminées entre les bords opposés 12a, 12b ..... 15a, 15b. La longueur L des ces bandes est égale au périmètre souhaité pour la culasse. Toutes ces bandes 16,... 19 ont une même largeur $l$ égale au quart de la dimension axiale souhaitée pour la culasse.

Comme visible sur la figure 5, il existe une zone continue de matière 20, qui a été représentée hachurée, assurant la liaison entre les bandes successives 16,... 19. La largeur $h$ de cette zone 20 est égale à la moitié de L ($h$ = L/2) ; la longueur $m$ de la zone 20, suivant une direction parallèle à celle de l'axe de la culasse enroulée, est égale à $4l$ et donc à la dimension axiale de la culasse. Les bandes 16 et 18, séparées par un espace 21 font saillie du même côté, par rapport à la zone 20, d'une distance $j$ égale à L/2. De même,les bandes 17 et 19 font saillie, du côté opposé,d'une distance j par rapport à la zone 20 ; un espace 22 sépare les parties en saillie des bandes 17 et 19.

Lorsque le flan C de la figure 5 est enroulé ou cintré pour former la culasse, on comprend que les bords 12a,...15a viennent respectivement en appui contre les bords 12b... 15b. La jonction entre les bords 12a, 12b est décalée angulairement de 180° par rapport à celle des bords 13a, 13b. De même la jonction des bords 13a, 13b est décalée de 180° par rapport à celle des bords 14a, 14b et ainsi de suite. On comprend également que l'espace 21 entre les bandes 16, 18 reçoit la partie en saillie de la bande 17. Il en est de même pour les autres espaces.

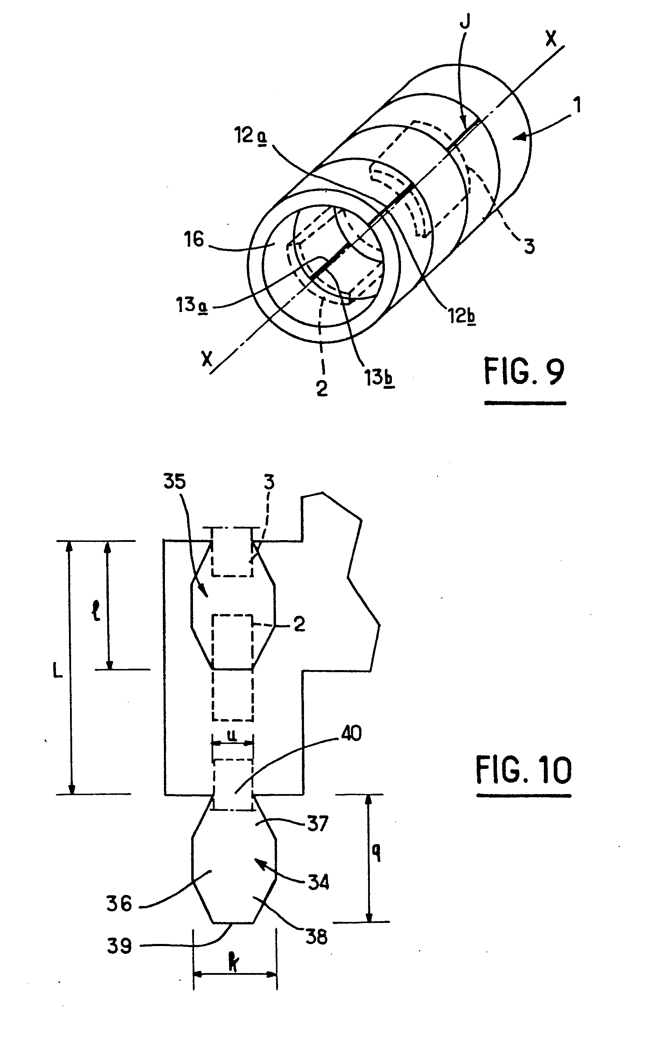

La culasse 1 obtenue après enroulement est représentée schématiquement en perspective sur la figure 9. Sur cette même figure 9, on a représenté par un contour en tirets la position de deux ferrites 2, 3 décalées de 180° situées sensiblement à mi-longueur, suivant la direction axiale de la culasse,et disposées, angulairement, de telle sorte que la génératrice médiane de chaque ferrite soit située, sensiblement, au niveau angulaire des arêtes de raccordement, c'est-à-dire des lignes de jonction entre les bords opposés des bandes 16 à 19.

Cette figure 9 permet de comprendre que l'enroulement du flan C est réalisé autour d'un axe X-X qui n'est pas situé dans le flan mais qui se trouve à une distance de ce flan égale au rayon de la culasse à obtenir, lorsqu'il s'agit d'une culasse à section cylindrique circulaire.

La figure 6 montre une autre configuration possible du flan C qui ne comprend que trois bandes 16, 17, 18 présentant les mêmes caractéristiques et dispositions que les bandes désignées par les mêmes références numériques sur la figure 5.

La figure 7 montre une autre configuration possible pour le flan C selon laquelle les gradins successifs 22a, 22b, ... 25a, 25b sont décalés transversalement toujours dans le même sens, les uns par rapport aux autres. Ainsi, la succession des gradins 22a, 23a, 24a, et 25a, situés d'un même côté du flan C correspond sensiblement à la succession des marches d'un escalier. Les bandes 26, 27, 28, 29 ont la forme de rectangles dont la longueur L est toujours égale au périmètre souhaité pour la culasse ; toutes ces bandes ont une même largeur $\underline{l}$. Le décalage transversal j entre deux gradins successifs tels que 22a, 23a est égal à L/2. Les bandes successives 26 ... 29 sont attachées les unes aux autres par des zones de matière telles que 30, 31 décalées.

Le flan C de la figure 7 est enroulé autour d'un axe X-X, parallèle à la direction des bords 22a, 23a ... mais qui n'est pas situé dans le plan de la figure 7 ; comme explique avec référence à la figure 9, cet axe X-X est situé à une distance du flan C égale au rayon de la culasse que l'on souhaite obtenir.

Chaque bande 26, ...29 va former un élément cylindrique raccordé aux deux éléments qui l'entourent par les zones telles que 30, 31 s'étendant sur 180°. La zone de raccordement des bords 22a, 22b sera décalée angulairement de 180° par rapport à celle des bords 23a, 23b et ainsi de suite.

Il est clair que pour toutes les configurations du flan C, notamment pour celles représentées sur les figures 5 à 7, on peut prévoir, sur les bords transversaux, des moyens d'accrochage analogues aux moyens 7 et 8 représentés sur la figure 2.

La figure 8 illustre, schématiquement, une forme de culasse 1a qui n'est pas circulaire mais qui se compose de deux faces planes parallèles reliées par deux parties 32, 33 de parois cylindriques, diamétralement opposées, contre lesquelles sont disposées, à l'intérieur, les ferrites 2 et 3.

Sur la figure 10, on a représenté une partie d'un flan C, cette partie correspondant à une bande telle que la bande 16 du flan C de la figure 5.

Un prolongement 34 de la bande est prévu sur un des bords transversaux de la bande tandis qu'une découpe conjuguée 35 est prévue sur l'autre bord pour recevoir le prolongement 34. Le prolongement 34 a une forme évasée favorable à la canalisation du flux magnétique. Plus précisément, le prolongement 34 présente, dans sa partie centrale, une zone 36 de largeur $k$ maximale; cette zone comporte, de part et d'autre, des extensions 37, 38 dont la largeur diminue progressivement. La longueur L de la bande considérée est égale au périmètre de la culasse.

La longueur $q$ du prolongement 34 peut être égale à L/2. Les dimensions de la découpe 35 correspondent à celles du prolongement 34. Dans ces conditions, sur la culasse formée, le bord transversal 39 du prolongement 34 sera décalé de 180° par rapport à la base 40 du prolongement. Les emplacements des ferrites 2 et 3, représentés par des contours en tirets, chevaucheront l'extrémité 39 du prolongement et la base 40 de ce prolongement, en s'étendant d'une même distance angulaire de part et d'autre. Avantageusement, la largeur $u$ de la base 40 du prolongement

----------- est sensiblement égale à la largeur des ferrites suivant une direction parallèle à l'axe de la culasse formée.

**0186530**

<u>REVENDICATIONS</u>

1. Procédé pour fabriquer une culasse de machine électrique, selon lequel on découpe un flan de tôle et on enroule ce flan de manière à amener l'un contre l'autre les bords transversaux extrêmes, la longueur du flan correspondant à celle du périmètre d'une section transversale de la culasse, caractérisé par le fait que les bords transversaux (A, B) du flan sont découpés en gradins (a1, b1 ; a2, b2) délimitant, entre eux, des bandes successives (5, 6) ayant une longueur totale (L) égale au périmètre souhaité pour la culasse, et que l'on enroule le flan ainsi formé de manière que les bords transversaux opposés des bandes successives viennent l'un contre l'autre.

2. Procédé selon la revendication 1, caractérisé par le fait que le décalage transversal (T) entre les bords (a1, a2) de deux gradins successifs est égal au quotient du périmètre de la section transversale de la culasse par un nombre pair $n$, et le nombre de bandes (5,6) délimitées par les gradins est au moins égal à $n$.

3. Procédé selon la revendication 2, caractérisé par le fait que le nombre pair $n$ est égal au nombre d'éléments magnétiques, notamment de ferrites (2,3) disposés à l'intérieur de la culasse.

4. Procédé selon la revendication 2 ou 3, caractérisé par le fait que le nombre $n$ est égal à 2 de telle sorte que les zones de raccordement des gradins successifs (a1, b1 ; a2, b2) sont décalées angulairement de 180°, lorsque la culasse est formée.

5. Procédé selon l'une quelconque des revendications précédentes, caractérisé par le fait que le flan (C) présente des gradins (12a, 13a, 14a, 15a ; 12b, 13b, 14b, 15b) décalés transversalement, les uns par rapport aux autres, alternativement dans un sens puis dans l'autre.

6. Procédé selon l'une quelconque des revendications 1 à 4, caractérisé par le fait que le flan (C) présente des gradins successifs (22a....25a ; 22b....25b) décalés transversalement dans le même sens.

7. Procédé selon l'une quelconque des revendications précédentes, caractérisé par le fait que les éléments magnétiques, notamment les ferrites (2,3), sont placés à l'intérieur de la culasse de manière à s'étendre angulairement d'une même distance de part et d'autre d'une zone de raccordement de gradins.

8. Procédé selon l'une quelconque des revendications précédentes, caractérisé par le fait que les largeurs ($\underline{1}$) des bandes délimitées par les gradins successifs sont égales.

9. Procédé selon l'une quelconque des revendications précédentes selon lequel au moins un prolongement est --------- prévu sur le bord d'au moins une bande, tandis qu'une découpe -----conjuguée est prévue sur l'autre bord de la bande pour recevoir le prolongement ----------------------------------- caractérisé par le fait que le prolongement ----- (34) a une forme évasée favorable à la canalisation du flux magnétique.

10. Procédé selon l'une quelconque des revendications précédentes, caractérisé par le fait que les bords transversaux (a1, a2 ; b1, b2) des bandes, délimitées par les gradins, sont parallèles à la direction de l'axe de la culasse formée.

11. Culasse de machine électrique, notamment obtenue par un procédé selon l'une quelconque des revendications précédentes, caractérisée par le fait qu'elle présente, sur sa paroi, une zone de raccordement (J) en gradins.

12. Culasse selon la revendication 11, caractérisée par le fait que la distance angulaire entre les zones de raccordement successives de deux gradins adjacents est de 180° environ.

FIG. 1

FIG. 2

FIG. 3

FIG. 4

**FIG. 5**

**FIG. 6**

**FIG. 7**

**FIG. 8**

**FIG. 9**

**FIG. 10**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| A | DE-A-3 036 865 (SIEMENS) <br> * Page 18, ligne 26 - page 19, ligne 24; figure 6 * | 1,11 | H 02 K 1/14 <br> H 02 K 5/04 |
| | --- | | |
| A | US-A-3 422 295 (GENERAL ELECTRIC) <br> * Colonne 2, lignes 7-11; figures 1-3 * | 1 | |
| | --- | | |
| A | EP-A-0 094 609 (EICHORN et al.) | | |
| | ----- | | |

DOMAINES TECHNIQUES RECHERCHES (Int Cl 4)

H 02 K 1/00
H 02 K 15/00
H 02 K 5/00

Le présent rapport de recherche a été établi pour toutes les revendications

| Lieu de la recherche | Date d'achèvement de la recherche | Examinateur |
|---|---|---|
| LA HAYE | 28-02-1986 | LE GUAY P.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OE BF orm 1503 03 82